# EUROPEAN PATENT SPECIFICATION

(11) **EP 3 680 633 B1**
(45) Date of publication and mention of the grant of the patent: **30.04.2025**
(21) Application number: 18853370.7
(22) Date of filing: 07.09.2018
(51) Int. Cl.: G01J 1/44, G01J 1/04, G05D 25/02

(54) **OPTICAL POWER DETECTION DEVICE AND APPARATUS**
OPTISCHE LEISTUNGSDETEKTIONSVORRICHTUNG UND GERÄT
DISPOSITIF ET APPAREIL DE DÉTECTION DE PUISSANCE OPTIQUE

(30) Priority: 07.09.2017 CN 201721144064 U
(43) Date of publication of application: 15.07.2020
(73) Proprietor: ZTE Corporation, Shenzhen, Guangdong 518057 (CN)
(72) Inventor: XIA, Zhe, Shenzhen Guangdong 518057 (CN); CHEN, Weizhang, Shenzhen Guangdong 518057 (CN); ZHANG, Yeman, Shenzhen Guangdong 518057 (CN)
(74) Representative: Ipsilon
(86) International application number: PCT/CN2018/104613
(87) International publication number: WO 2019/047923

(56) References cited:
- CN-A- 101 170 360
- CN-A- 101 170 360
- CN-A- 106 949 961
- CN-A- 107 104 724
- CN-U- 202 066 590
- CN-U- 207 570 667
- CN-Y- 201 368 769
- US-A- 4 611 600
- US-A1- 2009 022 490

## Description

### TECHNICAL FIELD

The present disclosure relates to, but is not limited to, the field of optical fiber devices.

### BACKGROUND

With the continuous development of laser technology, laser devices are more and more widely applied to general technologies of various fields of modern society, and play important roles in communication, medical treatment, machining, radar, material processing and the like. Optical power detector is one of the key technologies in the laser device, which plays a role in photoelectric conversion of output optical signals in the device, and is an important part of a laser control loop, and optical signal detection is an essential and important link of the whole laser device system.

Current optical power detectors used in the market include two independent functional units, i.e., a light splitting unit and a photodetection unit. The light splitting unit splits the emitted optical signal into two beams, one being output for external application, and the other being provided to the photodetection unit. The photodetection unit provides the detected optical signal to a light source control device which uses the optical signal detected by the photodetection unit in a negative feedback loop, so as to control the light source to output a stable and satisfactory laser source.

In applications, the main optical power of the light source device is assigned to an optical output port of the device, and only a small proportion of the optical power is input to the photodetector, resulting in a very weak electric signal output by the photodetector. Thus, an external amplifier is required to amplify the weak electrical signal. However, the external amplifier unit is easily interfered by other strong electromagnetic signals, and if the interference signals are crossed into the control loop of the light emitting unit, normal work of the control device of the light emitting unit will be affected so that the control device of the light emitting unit cannot work stably at a set locking point, resulting in unlocking of the working point. The unlocking of the working point may cause instability of the overall light emitting device, and it is externally shown as failure of the light emitting device.

In order to reduce the influence of interference, a metal shield for shielding electromagnetic interference needs to be additionally arranged. This kind of external shield needs to be installed manually, and is low in production efficiency, high in cost and unstable in working efficiency.

US Patent Application, US 4611600A1, titled "Optical fiber pressure transducer" discloses an optical fiber pressure transducer including a light source for emitting light along an optical axis defined by an optical fiber along a path so that the light strikes and is then reflected back from a mirror. The reflected light is transmitted by way of the same optical fiber and is diverted, as by a beam splitter, to a light detector. The light detector serves to measure the amount of the light reflected by mirror. The amount of light reflected back into the optical fiber is varied in dependence upon the position of a shutter located intermediate the distal end of the fiber and the mirror. Shutter is mounted to or fabricated as a contiguous part of a polymeric membrane which deflects in response to blood pressure acting on the membrane in a direction, as indicated by the arrow, which is transverse to the axis of fiber. As the blood pressure increases, the shutter interrupts more and more light and this is measured by the light detector.

### SUMMARY

According to an aspect of the disclosure, there is provided an optical power detection apparatus according to claim 1.

### BRIEF DESCRIPTION OF THE DRAWINGS

Accompanying drawings are provided for further understanding of the embodiments of the disclosure and constitute a part of the specification. Hereinafter, these drawings are intended to explain the disclosure together with the following embodiments, but should not be considered as a limitation to the disclosure. In the drawings:
FIG. 1 is a schematic structural diagram of an optical power detection device according to an embodiment of the present disclosure;
FIG. 2 is a current-voltage characteristic curve of a photocell according to an embodiment of the disclosure;
FIG. 3 is a schematic structural diagram of an electrical amplification module according to an embodiment of the disclosure;
FIG. 4 is a schematic structural diagram of an optical power detection apparatus according to an embodiment of the present disclosure;
FIG. 5 is a schematic structural diagram of a PM-QPSK transmitter including an optical power detection device according to an embodiment of the present disclosure;
FIG. 6 is a schematic structural diagram of an erbium-doped fiber amplifier including an optical power detection device according to an embodiment of the present disclosure; and
FIG. 7 is a schematic structural diagram of a PM-16QAM transmitter including an optical power detection device according to an embodiment of the present disclosure.

Implementations, functions, features and advantages of the present disclosure will be further explained below with reference to the embodiments and the accompanying drawings.

### DETAILED DESCRIPTION

For clarity and better understanding of the technical problems, technical solutions and beneficial effects of the present disclosure, the present disclosure will be further described in detail below in conjunction with the accompanying drawings and embodiments. It will be appreciated that the specific embodiments described herein are merely for illustration of the disclosure and are not intended to limit the disclosure.

In the following description, elements described using terms, such as "module", "component" or "unit", are only used for facilitating description of the present disclosure, and have no specific meaning in themselves. Thus, "module", "component" or "unit" may be used interchangeably.

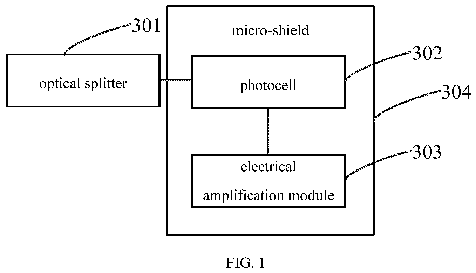

FIG. 1 is a schematic structural diagram of an optical power detection device according to an embodiment of the present disclosure not according to the claims.

As shown in FIG. 1, the optical power detection device according to an embodiment of the present disclosure includes an optical splitter 301, a photocell 302, an electrical amplification module 303, and a micro-shield 304. The photocell 302 and the electrical amplification module 303 may be integrated.

The optical splitter 301 splits an input optical signal into a first optical signal and a second optical signal at a preset fixed proportion; and adjusts the proportion as needed. The proportion is not changeable any more after being determined, and it may be considered that the output optical power and the total input optical signal power are linearly proportional. The first optical signal is used as an input signal of an optical detection branch, and the second optical signal is used for output.

The photocell 302 is connected to an output end of the optical splitter 301 for outputting the first optical signal. The photocell 302 receives the first optical signal output by the optical splitter 301, and converts the first optical signal into a current signal. The photocell 302 may be a photodiode device for converting light energy into electric energy. For example, a PN junction photodiode may utilize the photosensitive property of the PN junction to convert the received light change into a current change.

The micro-shield 304 encapsulates the photocell 302 and the electrical amplification module 303. Since the current output by the photocell 302 is very weak, the electrical amplification module 303 works in a weak small-signal state in which the current-voltage conversion process is easily interfered by external high-frequency signals. In this embodiment, the photocell 302 and the electrical amplification module 303 are encapsulated in the micro-shield 304 as a whole, so as to prevent external interference from affecting output of the voltage signal. The micro-shield 304 may shield interference of external electromagnetic signals.

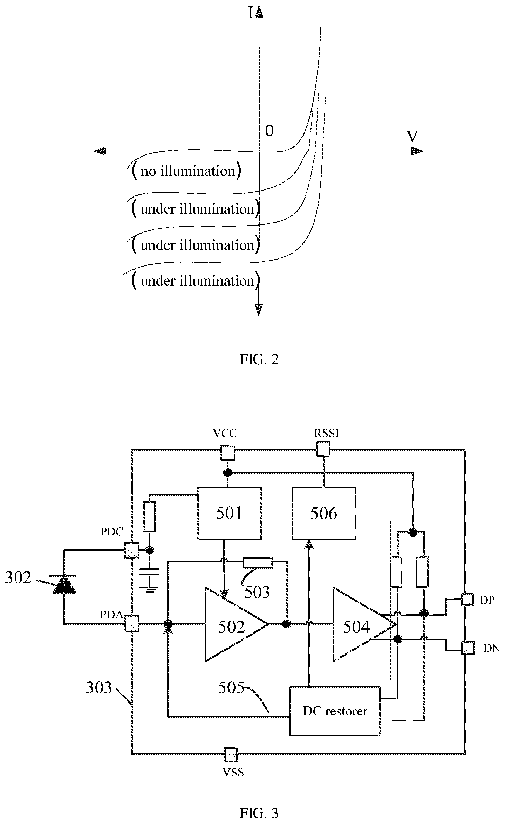

FIG. 2 is a current-voltage characteristic curve of a photocell according to an embodiment of the disclosure.

Referring to FIG. 2, in the absence of illumination, the photocell, like a common diode, has unidirectional conductivity, and when a forward voltage is applied externally, the current and the terminal voltage have an exponential relationship; when a reverse voltage is applied externally, the reverse current is called dark current and is generally less than 5 nA. In the presence of illumination, the characteristic curve moves downward. The characteristic curve is a set of parallel lines of the horizontal axis over a certain range of reverse voltages. The current generated by the photocell under illumination at the reverse voltage is called photocurrent, which is controlled by the incident light intensity. When the light intensity is constant, an optical detector may be equivalent to a constant current source. The greater the light intensity, the greater the photocurrent, and the photocurrent has a linear relationship with the light intensity when the photocurrent is greater than tens of microamperes.

Since the photoelectric conversion efficiency of the photodiode device directly affects the product performance, this index is generally required to be greater than 0.7 a/w. In addition, in order to reduce background noise interference, the dark current index is not greater than 5 nA. To expand the dynamic range of the input optical signal, the photocell is reversely biased.

Returning to FIG. 1, the electrical amplification module 303 is connected to an output end of the photocell 302 for outputting current signals, receives the current signal output by the photocell 302, converts the current signal into a voltage signal, and performs gain processing on and then outputs the voltage signal.

The micro-shield 304 may have, for example, a disc or cylindrical shape, but the embodiment of the present disclosure is not limited thereto. In a specific implementation, the micro-shield 304 may be provided with an optical communication via and an electrical communication via. The optical communication via is used for installation of a convex lens or passing of an optical fiber, thereby transmitting the first optical signal to the photocell 302. The optical fiber may include a tapered optical fiber. The electrical communication via is used for passing of a power supply wire or a pin, so as to transmit the gain-processed voltage signal.

FIG. 3 is a schematic structural diagram of an electrical amplification module according to an embodiment of the disclosure.

As shown in FIG. 3, the electrical amplification module 303 according to an embodiment of the disclosure may include a pre-amplifier 502 connected to an anode of the photocell 302 via a PDA pin, and a post-amplifier 504 connected to the pre-amplifier 502.

The pre-amplifier 502 converts the current signal output by the photocell 302 into a voltage signal through a feedback resistor 503. The pre-amplifier 502 may also control the gain of the voltage signal by changing the resistance of the feedback resistor 503.

In an embodiment of the present disclosure, a power supply may supply power to the pre-amplifier 502 via a VCC pin and a voltage regulator 501, so as to reduce power supply noise interference. The power supply may also be connected to a cathode of the photocell 302 via a voltage regulator 501 and a PDC pin.

The post-amplifier 504 performs gain processing on the voltage signal converted by the pre-amplifier 502. To increase the dynamic range of the input signal and maintain a fixed signal output range, the gain of the post-amplifier 504 is processed by an Automatic Gain Control (AGC) unit.

In an embodiment of the present disclosure, the electrical amplification module 303 may further include a low frequency feedback loop unit 505 and a Received Signal Strength Indication (RSSI) unit 506 connected to the low frequency feedback loop unit 505. The low frequency feedback loop unit 505 is connected to the post-amplifier 504 to eliminate a DC signal component in an input signal of the electrical amplification module 303. The signal output by the post-amplifier 504 is output after the DC signal component is removed by the low frequency feedback loop unit 505. The low frequency feedback loop unit 505 may include a DC restorer, and two resistors connected to the DC restorer.

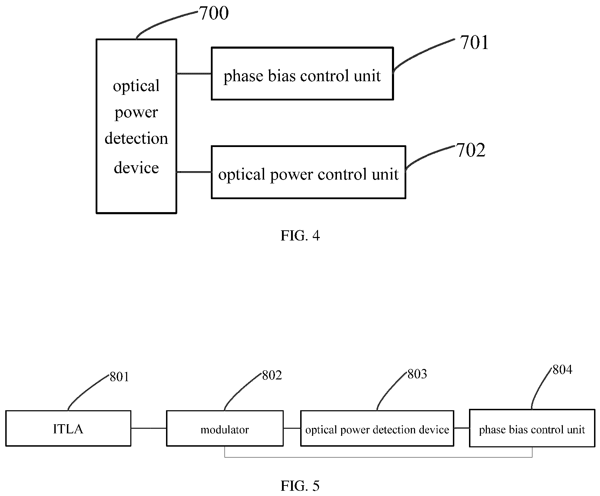

FIG. 4 is a schematic structural diagram of an optical power detection apparatus according to an embodiment of the present disclosure.

As shown in FIG. 4, the optical power detection apparatus according to an embodiment of the present disclosure includes the optical power detection device 700 according to the embodiments of the present disclosure, and at least one of a phase bias control unit 701 and an optical power control unit 702. The phase bias control unit 701 and the optical power control unit 702 are respectively connected to the optical power detection device 700, and respectively receive a voltage signal output by the optical power detection device 700.

Typically, a phase bias control unit 701 may be connected to a modulator to adjust a phase bias working point of the modulator. The optical power control unit 702 may be connected with a variable optical attenuator, and the output optical signal power is adjusted by controlling an attenuation value of the variable optical attenuator.

The optical power detection device according to the embodiment of the disclosure may be applied to a PM-QPSK transmitter, an erbium-doped fiber amplifier, a PM-16QAM transmitter and the like.

FIG. 5 is a schematic structural diagram of a PM-QPSK transmitter including an optical power detection device according to an embodiment of the present disclosure.

As shown in FIG. 5, in an optical transmitter for implementing a 100 Gbit/s highspeed optical transmission device, the transmitter using a Mach-Zehnder type modulator is a transmitter based on a PM-QPSK modulation device. A bias voltage of a modulator 802 is controlled by a pilot signal plus a DC value.

The optical input to the modulator 802 uses a tunable laser (ITLA) 801 as a light source, and optical signals of continuous wavelengths emitted by the ITLA 801 are modulated by the modulator 802 to form optical output signals in an optical PM-QPSK modulation format. The data input to modulator 802 are 4-way signals output from a PM-QPSK signal source (not shown).

The modulated optical signal output by the modulator 802 is input to an optical power detection device 803. The optical power detection device 803 may be an optical power detection device according to the embodiments of the present disclosure. The optical power detection device 803 splits the modulated optical signal into two parts, i.e., a first optical signal and a second optical signal. The second optical signal is coupled into an output port of the optical power detection device 803, i.e., a 100G network-side optical output port, as a main output signal. The first optical signal is coupled into the photocell 302, and the photocell 302 and the electrical amplification module 303 are disposed in the micro-shield 304 (see FIG. 1) to convert the input optical signal into a photocurrent, and then into a voltage signal for amplification. The amplitude of the voltage signal is in a proportional relationship with the total input optical signal power of the optical power detection device 803, and may reflect the magnitude of the total input optical power, so that the output optical signal power may be adjusted by controlling an attenuation value of the variable optical attenuator. The output of the electrical amplification module 303 in the optical power detection device 803 is transmitted to the phase bias control unit 804 to adjust a phase bias working point of the modulator 802.

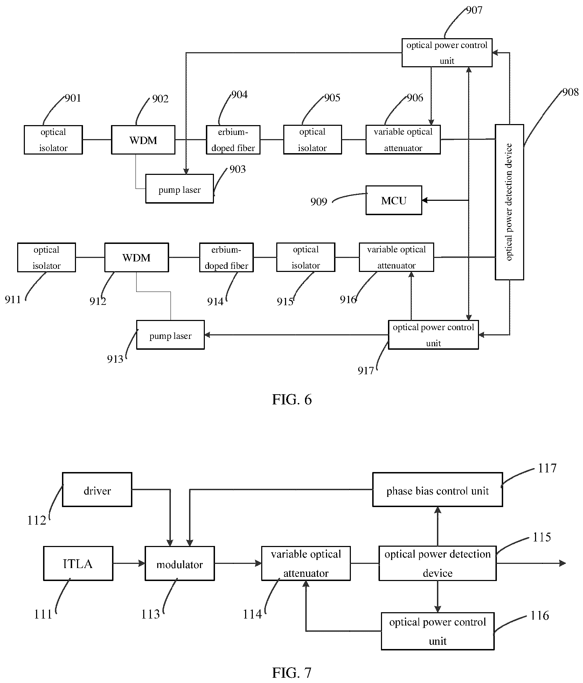

FIG. 6 is a schematic structural diagram of an erbium-doped fiber amplifier including an optical power detection device according to an embodiment of the present disclosure.

As shown in FIG. 6, the erbium-doped fiber amplifier includes: optical isolators 901, 905, 911 and 915; 980nm/1550nm wavelength division multiplexers (WDMs) 902, 912; 980nm pump lasers 903, 913; erbium-doped fibers 904 and 914, variable optical attenuators 906 and 916, an optical power detection device 908, an optical power control unit 907, and a Micro Control Unit (MCU) 909. The optical isolator 901, the wavelength division multiplexer 902, the erbium-doped fiber 904, the optical isolator 905, the variable optical attenuator 906 and the optical power detection device 908 are connected in sequence. The pump laser 903 is connected to the wavelength division multiplexer 902 to deliver energy to the erbium-doped fiber 904. The optical power control unit 907 is connected to an output end of the optical power detection device 908 and the MCU 909, respectively. The optical isolator 911, the wavelength division multiplexer 912, the erbium-doped fiber 914, the optical isolator 915, the variable optical attenuator 916 and the optical power detection device 908 are connected in sequence. The pump laser 913 is connected to the wavelength division multiplexer 912 to deliver energy to the erbium-doped fiber 914. The optical power control unit 917 is connected to an output end of the optical power detection device 908 and the MCU 909, respectively. In actual use, for two groups of input optical signals, one reaches the optical power detection device 908 via the optical isolator 901, the wavelength division multiplexer 902, the erbium-doped fiber 904, the optical isolator 905 and the variable optical attenuator 906, and the other reaches the optical power detection device 908 via the optical isolator 911, the wavelength division multiplexer 912, the erbium-doped fiber 914, the optical isolator 915 and the variable optical attenuator 916.

In this embodiment, a 1550nm optical signal is added from the input end, and energy from the 980nm pump laser is received in the erbium-doped fiber so that stimulated radiation is produced and a 1550nm optical signal with an enhanced power is output.

Part of the optical signals split out by the optical power detection device 908 is used for detecting strength of the optical signals, and the rest optical signals are coupled into to the output port for transmission of the optical signals. The optical signal detected by the optical power detection device 908 is converted into an electrical signal, and then input to the optical power control units 907 and 917 as a negative feedback signal to control the variable optical attenuators 906 and 916 to output satisfactory optical signal strength.

The optical power detection device 908 may be an optical power detection device according to the embodiments of the present disclosure.

FIG. 7 is a schematic structural diagram of a PM-16QAM transmitter including an optical power detection device according to an embodiment of the present disclosure.

As shown in Fig. 7, in a 200G PM-16QAM transmitter, an optical input to a modulator 113 uses a tunable laser, ITLA 111, as a light source. Optical signals of continuous wavelengths emitted by the ITLA 111 are modulated by the modulator 113 to form optical output signals in an optical 16QAM modulation format. The data input to the modulator 113 are signals amplified by a driver 112 from signals output of a two-channel 4-way signal source (not shown).

The modulated optical signal output from the modulator 113 enters an optical power detection device 115 through a variable optical attenuator 114. The optical power detection device 115 splits the modulated optical signal into two parts, one is coupled into an output port of the optical power detection device 115, i.e., a 200G network-side optical output port, as a main output signal; and the other is coupled into the photocell 302, and the photocell 320 and the electrical amplification module 303 are disposed in the micro-shield 304 (see FIG. 1) to convert the input optical signal into a photocurrent, and then into a voltage signal for amplification. The amplitude of the voltage signal is in a proportional relationship with the total input optical signal power of the optical power detection device 115, and may reflect the magnitude of the total input optical power. The voltage signal is output to the optical power control unit 116 so that the output optical signal power may be adjusted by controlling an attenuation value of the variable optical attenuator 114. Further, the output of the electrical amplification module 303 in the optical power detection device 115 is transmitted to the phase bias control unit 117 to adjust a phase bias working point of the modulator 113.

The present disclosure provides an optical power detection device in which the photocell and the electrical amplification module are encapsulated in the micro-shield to protect signals of the photocell and the electrical amplification module from external interference, thereby effectively saving material cost of the external shield as well as labor cost of welding and installation. In the present disclosure, the optical splitter, the photocell and the electrical amplification module are integrated, thereby improving the sensitivity and integration level while reducing the number of devices, and thus facilitating layout and wiring.

The embodiments of the present disclosure have been described above with reference to the accompanying drawings, but the scope of the present disclosure is not limited thereby. Those skilled in the art can implement the present disclosure in various modifications without departing from the scope of the claims.

## Claims

1. An optical power detection apparatus, comprising:
a modulator configured to modulate an optical signal of a light source to output a modulated optical signal;
an optical power detection device (700) comprising:
an optical splitter (301) configured to receive the modulated optical signal and split the modulated optical signal into a first optical signal and a second optical signal at a preset fixed proportion, the second optical signal being coupled into an output port of the optical power detection device as a main output signal;
a photocell (302) connected to an output end of the optical splitter (301), the photocell (302) being configured to receive the first optical signal output by the optical splitter (301) and convert the first optical signal into a current signal;
an electrical amplification module (303) connected to an output end of the photocell (302), the electrical amplification module (303) being configured to receive the current signal output by the photocell (302), convert the current signal into a voltage signal, and perform gain processing on and then output the voltage signal; and
a micro-shield (304) configured to encapsulate the photocell (302) and the electrical amplification module (303); **characterized in that** the optical power detection apparatus further comprises
a phase bias control unit (701) connected to the optical power detection device (700) and the modulator, and configured to receive a voltage signal output by the optical power detection device (700) and to adjust a phase bias working point of the modulator.

2. The optical power detection apparatus of claim 1, wherein the photocell (302) is reversely biased.

3. The optical power detection apparatus of claim 1, wherein the electrical amplification module (303) comprises:
a pre-amplifier (502) connected to an anode of the photocell (302), the pre-amplifier (502) being configured to convert a current signal into a voltage signal through a feedback resistor; and
a post-amplifier (504) connected to the pre-amplifier (502), the post-amplifier (504) being configured to perform gain processing on the voltage signal converted by the pre-amplifier (502).

4. The optical power detection apparatus of claim 3, wherein the electrical amplification module (303) further comprises:
a low frequency feedback loop unit (505) connected to the post-amplifier (504), the low frequency feedback loop unit (505) being configured to eliminate a DC signal component in an input signal of the electrical amplification module (303).

5. The optical power detection apparatus of claim 4, wherein the electrical amplification module (303) further comprises:
a received signal strength indication unit (506) connected to the low frequency feedback loop unit (505).

6. The optical power detection apparatus of claim 3, wherein the electrical amplification module (303) further comprises:
a power supply connected to the pre-amplifier (502) and a cathode of the photocell (302).

7. The optical power detection apparatus of claim 1, wherein the micro-shield (304) is provided with an optical communication via and an electrical communication via.

8. The optical power detection apparatus of claim 1, further comprising an optical power control unit (702), wherein
the optical power control unit (702) is connected to the optical power detection device (700) and receives the voltage signal output by the optical power detection device (700).

## Patentansprüche

1. Optische Leistungsdetektionsvorrichtung, umfassend:
einen Modulator, der konfiguriert ist, um ein optisches Signal einer Lichtquelle zu modulieren, um ein moduliertes optisches Signal auszugeben;
eine optische Leistungsdetektionsvorrichtung (700), umfassend:
einen optischen Splitter (301), der konfiguriert ist, um das modulierte optische Signal zu empfangen und das modulierte optische Signal in ein erstes optisches Signal und ein zweites optisches Signal in einer voreingestellten festen Proportion zu splitten, wobei das zweite optische Signal in einen Ausgabeport der optischen Leistungsdetektionsvorrichtung als ein Hauptausgabesignal gekoppelt ist;
eine Photozelle (302), die mit einem Ausgabende des optischen Splitters (301) verbunden ist, wobei die Photozelle (302) konfiguriert ist, um den ersten optischen Signalausgang durch den optischen Splitter (301) zu empfangen und das erste optische Signal in ein Stromsignal umzuwandeln;
ein Modul zur elektrischen Verstärkung (303), das mit einem Ausgabende der Photozelle (302) verbunden ist, wobei das Modul zur elektrischen Verstärkung (303) konfiguriert ist, um den Stromsignalausgang durch die Photozelle (302) zu empfangen, das Stromsignal in ein Spannungssignal umzuwandeln und eine Verstärkungsverarbeitung auf dem Spannungssignal durchzuführen und dann dieses auszugeben; und
eine Mikroabschirmung (304), die konfiguriert ist, um die Photozelle (302) und das Modul zur elektrischen Verstärkung (303) einzukapseln; **dadurch gekennzeichnet, dass** die optische Leistungsdetektionsvorrichtung weiter eine Phasenvorspannungs-Steuereinheit (701) umfasst, die mit der optischen Leistungsdetektionsvorrichtung (700) und dem Modulator verbunden ist, und konfiguriert, um eine Spannungssignalausgabe durch die optische Leistungsdetektionsvorrichtung (700) zu empfangen und einen Phasenvorspannungs-Arbeitspunkt des Modulators einzustellen.

2. Optische Leistungsdetektionsvorrichtung nach Anspruch 1, wobei die Photozelle (302) sperrvorgespannt ist.

3. Optische Leistungsdetektionsvorrichtung nach Anspruch 1, wobei das Modul zur elektrischen Verstärkung (303) Folgendes umfasst:
einen Vorverstärker (502), der mit einer Anode der Photozelle (302) verbunden ist, wobei der Vorverstärker (502) konfiguriert ist, um ein Stromsignal durch einen Rückkopplungswiderstand in ein Spannungssignal umzuwandeln; und
einen Nachverstärker (504), der mit dem Vorverstärker (502) verbunden ist, wobei der Nachverstärker (504) konfiguriert ist, um eine Verstärkungsverarbeitung auf dem Spannungssignal durchzuführen, das von dem Vorverstärker (502) umgewandelt wurde.

4. Optische Leistungsdetektionsvorrichtung nach Anspruch 3, wobei das Modul zur elektrischen Verstärkung (303) weiter Folgendes umfasst:
eine niederfrequente Rückkoppelungs-Schleifeneinheit (505), die mit dem Nachverstärker (504) verbunden ist, wobei die niederfrequente Rückkoppelungs-Schleifeneinheit (505) konfiguriert ist, um eine DC-Signalkomponente in einem Eingabesignal des Moduls zur elektrischen Verstärkung (303) zu entfernen.

5. Optische Leistungsdetektionsvorrichtung nach Anspruch 4, wobei das Modul zur elektrischen Verstärkung (303) weiter Folgendes umfasst:
eine Anzeigeeinheit für empfangene Signalstärken (506), die mit der niederfrequenten Rückkoppelungs-Schleifeneinheit (505) verbunden ist.

6. Optische Leistungsdetektionsvorrichtung nach Anspruch 3, wobei das Modul zur elektrischen Verstärkung (303) weiter Folgendes umfasst:
eine Stromversorgung, die mit dem Vorverstärker (502) und einer Kathode der Photozelle (302) verbunden ist.

7. Optische Leistungsdetektionsvorrichtung nach Anspruch 1, wobei die Mikroabschirmung (304) mit einem optischen Kommunikationsweg und einem elektrischen Kommunikationsweg ausgestattet ist.

8. Optische Leistungsdetektionsvorrichtung nach Anspruch 1, weiter umfassend eine optische Leistungssteuereinheit (702), wobei
die optische Leistungssteuereinheit (702) mit der optischen Leistungsdetektionsvorrichtung (700) verbunden ist und die Spannungssignalausgabe durch die optische Leistungsdetektionsvorrichtung (700) empfängt.

## Revendications

1. Appareil de détection de puissance optique, comprenant :
un modulateur configuré pour moduler un signal optique d'une source lumineuse pour produire un signal optique modulé ;
un dispositif de détection de puissance optique (700) comprenant :
un séparateur optique (301) configuré pour recevoir le signal optique modulé et diviser le signal optique modulé en un premier signal optique et un deuxième signal optique à une proportion fixe prédéfinie, le deuxième signal optique étant couplé à un port de sortie du dispositif de détection de puissance optique en tant que signal de sortie principal ;
une cellule photoélectrique (302) connectée à une extrémité de sortie du séparateur optique (301), la cellule photoélectrique (302) étant configurée pour recevoir le premier signal optique délivré par le séparateur optique (301) et convertir le premier signal optique en signal de courant ;
un module d'amplification électrique (303) connecté à une extrémité de sortie de la cellule photoélectrique (302), le module d'amplification électrique (303) étant conçu pour recevoir le signal de courant délivré par la cellule photoélectrique (302), convertir le signal de courant en signal de tension, et effectuer un traitement de gain sur le signal de tension, puis délivrer en sortie celui-ci ; et
un microblindage (304) conçu pour encapsuler la cellule photoélectrique (302) et le module d'amplification électrique (303) ;
**caractérisé en ce que** l'appareil de détection de puissance optique comprend en outre
une unité de commande de polarisation de phase (701) connectée au dispositif de détection de puissance optique (700) et au modulateur, et configurée pour recevoir un signal de tension délivré par le dispositif de détection de puissance optique (700) et pour ajuster un point de fonctionnement de polarisation de phase du modulateur.

2. Appareil de détection de puissance optique selon la revendication 1, dans lequel la cellule photoélectrique (302) est polarisée de façon inverse.

3. Appareil de détection de puissance optique selon la revendication 1, dans lequel le module d'amplification électrique (303) comprend :
un préamplificateur (502) connecté à une anode de la cellule photoélectrique (302), le préamplificateur (502) étant configuré pour convertir un signal de courant en signal de tension via une résistance de rétroaction ; et
un post-amplificateur (504) connecté au préamplificateur (502), le post-amplificateur (504) étant configuré pour effectuer un traitement de gain sur le signal de tension converti par le préamplificateur (502).

4. Appareil de détection de puissance optique selon la revendication 3, dans lequel le module d'amplification électrique (303) comprend en outre :
une unité de boucle de rétroaction basse fréquence (505) connectée au post-amplificateur (504), l'unité de boucle de rétroaction basse fréquence (505) étant configurée pour éliminer une composante de signal CC dans un signal d'entrée du module d'amplification électrique (303).

5. Appareil de détection de puissance optique selon la revendication 4, dans lequel le module d'amplification électrique (303) comprend en outre :
une unité d'indication de l'intensité du signal reçu (506) connectée à l'unité de boucle de rétroaction basse fréquence (505).

6. Appareil de détection de puissance optique selon la revendication 3, dans lequel le module d'amplification électrique (303) comprend en outre :
une alimentation électrique connectée au préamplificateur (502) et à une cathode de la cellule photoélectrique (302).

7. Appareil de détection de puissance optique selon la revendication 1, dans lequel le microblindage (304) est pourvu d'un trou d'interconnexion de communication optique et d'un trou d'interconnexion de communication électrique.

8. Appareil de détection de puissance optique selon la revendication 1, comprenant en outre une unité de régulation de puissance optique (702), dans lequel
l'unité de régulation de puissance optique (702) est connectée au dispositif de détection de puissance optique (700) et reçoit le signal de tension délivré par le dispositif de détection de puissance optique (700).
